# EUROPEAN PATENT SPECIFICATION

(11) **EP 0 522 164 B1**
(45) Date of publication and mention of the grant of the patent: **27.03.1996**
(21) Application number: 91920776.1
(22) Date of filing: 29.11.1991
(51) Int. Cl.: A01N 25/18, A01N 25/34

(54) **ANIMAL REPELLENT MATERIAL**
TIEREABSCHRECKENDES MATERIAL
SUBSTANCE REPULSIVE ELOIGNANT LES ANIMAUX

(30) Priority: 29.11.1990 JP 128623/90 U
(43) Date of publication of application: 13.01.1993
(73) Proprietor: OSAKA GAS CO., LTD., Osaka-shi, Osaka-fu 541 (JP)
(72) Inventor: HASEGAWA, Masamitsu 41-13, Yawatahirokado, Kyoto 614 (JP); KURODA, Yasuhisa 759-9, Misato, Nara 636 (JP)
(74) Representative: Patentanwälte Beetz - Timpe - Siegfried Schmitt-Fumian - Mayr
(86) International application number: PCT/JP91/01655
(87) International publication number: WO 92/09196

(56) References cited:
- EP-A- 0 329 868
- DE-A- 2 738 878
- GB-A- 1 291 432
- GB-A- 2 002 635
- JP-A- 2 019 305
- JP-A-50 116 638
- JP-A-61 194 001
- JP-A-63 030 401
- JP-A-63 039 533
- US-A- 4 515 909
- CHEMICAL PATENTS INDEX, BASIC ABSTRACTS JOURNAL Section Ch, Week 8811, 11 May 1988 Derwent Publications Ltd., London, GB; Class C03, AN 88-075254/11

## Description

The invention relates to a repelling material for animals prepared by adsorbing a repellent on active carbon fibres.

As repellents for preventing animals from approaching, cinnamic aldehyde, γ-nonylolactone, rosegeranium oil, sandalwood oil, menthol, citral, cinnamic alcohol, methyleugenol, geraniol, linalool and the like are known. In addition, limonene and the like are known as disclosed in JP-A-110602/89.

As disclosed in the above-mentioned publication, said repellents were applied to an objective place as such or in the form of preparations with addition of diluents, extending agents, retaining agents, excipients, emulsifiers and the like by the following means:
(1) applying the repellent in powder form;
(2) spraying the repellent in a liquid form;
(3) applying the repellent in a tablet form;
(4) filling the repellent into capsules made of a low air-permeable material such as gelatin, polyvinylalcohol, maltose and the like, and applying the capsules to an objective place;
(5) providing the repellent in a bag made of polyethylene, polyvinyl chloride, paper or the like, and applying the bag to an objective place;
(6) incorporating the repellent in a film for bag-production by mixing the repellent into a melt of synthetic resin material;
(7) impregnating the paper with repellent and laminating one or two sides of the paper with a film made of polyethylene and the like synthetic resins.

A conventional repelling material for animals produced by retaining a repellent (e.g. a repelling material for animals, birds and the like) on granulated active carbon has only a short life so that development of a repelling material for animals retaining higher amounts of a repellent, gradually releasing the repellent and having a long life was earnestly desired.

JP-A-63-30401 discloses an animal and bird repellent containing 2-butoxyethanol as active component. This substance can be impregnated on a porous carrier such as ropes, strings, cloths and paper.

JP-A-61194001 relates to an animal repellent on the basis of a glycol ether as active ingredient which is adsorbed on a porous carrier.

EP-A-329 868 and JP-A-63-39533 relate to an insect repellent, particularly for cockroaches, comprising a low volatility repellent agent adsorbed on activated carbon fibres, a sustained release agent not being provided.

DE-A-27 38 878 deals with a pyrethroid insecticide, comprising a mixture of the pyrethroid insecticide and a sustained release agent which can be selected, inter alia, from phthalic acid esters, citric acid esters, diethylene glycol and diethylene glycol benzoate. This composition is used for evaporating the insecticide by heating.

GB-A-2 002 635 discloses pyrethroid insecticides which are adsorbed on a porous carrier, such as pulp sheets, and comprise a sustained release agent selected, inter alia, from phthalic acid esters, citric acid esters, and glycol ethers.

JP-A-63-39533 discloses a repellent material, in particular for cockroaches, which comprises a carrier member containing activated carbon fibres and a cockroach repelling agent. The carrier member has the structure of a felt, a woven fabric or a non-woven fabric. The activated carbon fibres have a diameter of 5 to 50 µm and are present in an amount per unit area of 50 to 500 g/m². No sustained release agent is used.

JP-A-50-116638 discloses a method for maintaining the activity of pyrethroid insecticides which comprises mixing the pyrethroid insecticide with one ore more plasticizers.

Examples therefor are di-2-ethylhexylphthalate and like phthalic acid esters, tributylcitrate and like citric acid esters, butylphthalylbutylglycolate and like glycolic acid esters, etc. The carrier member is made of glass fibres, asbestos, porous synthetic resin, cloth, etc. The use of active carbon fibres is not mentioned in this document.

Finally, it has been known from US-A-45 15 909 to incorporate fragrant substances into an ethylene-vinyl acetate copolymer together with a diffusing agent which, inter alia, can be selected from lower phthalic acid esters.

The inventors have conducted an extensive research on a repelling material for animals retaining a higher amount of a repellent, gradually releasing the repellent and having a long life. It has been found that a repelling material for animals retaining a higher amount of repellent, not rapidly releasing the retained repellent and having a long life can be produced by using carbon fibres as carrier and special chemical substances as sustained release agents.

The animal repellent of the present invention comprises
- active carbon fibres as carrier,
- an animal repelling agent,
   and
- at least one substance selected from diethyl phthalate, dibutyl phthalate, trimethyl citrate, triethyl citrate, dipropylene glycol and butyl diglycol as sustained release agent.

As active carbon fibres, any fibres derived from pitch, polyacrylonitriles (PAN), phenols, celluloses and the like can be used.

The active carbon fibres usually have a diameter of about 2 to about 30 µm, a specific surface area of about 500 to about 2500 m²/g, a pore diameter of about 10 to about 40 Å and a sharp distribution of the pore size.

As repellents, a variety of chemical substances can be selected in accordance with the field of application.

In case of an animal repellent, the following chemical substances can be exemplified:
* As repellents for dogs and cats, cinnamic aldehyde, γ-nonylolactone, lemon oil, paracresol acetate and the like can be used.
* As repellents for pigeons, sparrows, bulbuls and the like birds, phenylethylalcohol, geraniol, rosegeranium oil (a general term for benzylbenzoate, linalylacetate, linalool etc.), spearmint oil, L-carvone, bornylacetate, camphor, tetrahydrothiophene, citronellol and the like can be used.
* As repellents for cockroaches, cinnamic alcohol, methyleugenol, geraniol and the like can be used.
* As repellents for mosquitoes, sandalwood oil, menthol, citral and the like can be used.

However, repelling materials for animals have a short life if they are simply retained on a carrier due to rapid release of the repellent in a short time.

The sustained release agents used exert an excellent sustained release effect. The chemical substances used as sustained release agents are exemplified by esters of phthalic acid such as diethylphthalate, dibutylphthalate and the like, esters of citric acid such as triethylcitrate, trimethylcitrate and the like, dipropylene glycol and butyldiglycol.

If there is not used a sustained release agent, the active ingredients are rapidly released while the repellent is allowed to stand in contact with air. On the other hand, when the content of the sustained release agent is too high, the repelling effect to animals decreases. Thus, the quantity of the sustained release agent used is preferably 1 to 9 parts by weight, and more preferably 2.33 to 9 parts by weight per 1 part by weight of the repellent.

The active carbon fibres retaining the repellent may be present in a variety of shapes, such as in the form of a felt-like material, a felt on a support of nonwoven fabric of polyester an the like provided on one or both sides, a sheet-like material, a string-like material, or a material having a higher bulk density formed by dry or wet processing.

The present repelling material for animals can be produced by dipping active carbon fibres in a given form into a mixed solution of a repellent and a sustained release agent, and impregnating the fibres while retaining a predetermined amount of the repellent and the sustained release agent. It can also be obtained by dropwise addition of a mixed solution of a repellent and a sustained release agent to active carbon fibres. Further, it can be prepared by adsorbing a sustained release agent after adsorbing a repellent on active carbon fibres, or by adsorbing a repellent after adsorbing a sustained release agent on active carbon fibres. Further, it can be obtained by alternately adsorbing a repellent and a sustained release agent on active carbon fibres. Among these producing methods, the adsorption of a mixture of both substances is preferable.

The repelling material for animals formed by impregnating carbon fibres with a repellent and a sustained release agent is used in air-permeable bags or containers having a venting hole or an opening. The repellent for animals is sealed so as not to release the active ingredient during storage and transport. Diluents, extending agents, other sustained release agents not mentioned above, excipients, emulsifiers and the like can be additionally used, if necessary.

In the following, the invention will be described with reference to preferred embodiments and the accompanying drawings.

Figs. 1 to 4 and 6 show results of determinations of the residual quantity of adsorbed material in dependence of the applied conditions.

Fig. 5 shows results of determinations of the residual quantity of adsorbed material after 7 days in dependence of the amount of sustained release agent.

Fig. 7 shows a cross-section of a composite material consisting of active carbon fibres supported by a nonwoven fabric made of polyester fibres.

Fig. 8 shows the animal repellent stored in a can.

The present invention will be described in detail with reference to examples.

The active carbon fibres used in the experiments and examples were active carbon fibres made from pitch (product of OSAKA GAS CHEMICAL CO., LTD.) having a specific surface area of 1,000 m²/g. The repellent used in the experiments 1 to 4 was a repellent for birds in the form of a mixture of the four species of phenylethylalcohol, geraniol, citronellol and rosegeranium oil.

### EXPERIMENT 1

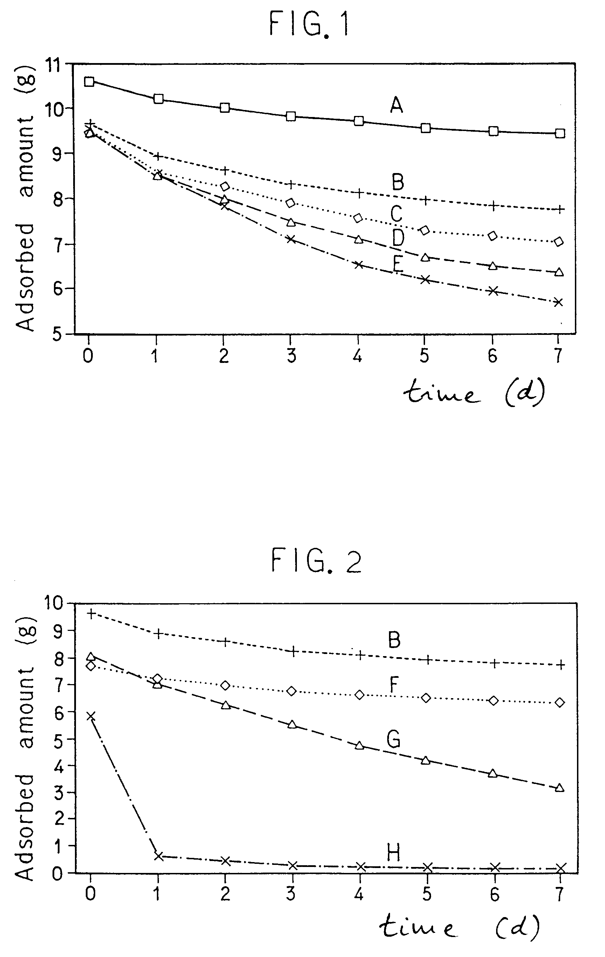

0.5 g of active carbon fibres was dipped into a mixture of 90 parts by weight of diethylphthalate (DEP) as sustained release agent and 10 parts by weight of the repellent and impregnated until saturated. After the active carbon fibres had been taken out from the mixture they were suspended in the form of threads for 1 hour at room temperature, and thereafter, the weight of the adsorbed material was determined with a balance. This weight was defined as initial weight. The active carbon fibres impregnated with the mixture were then kept in a thermostat at 60 °C to accelerate release of adsorbed substances, and the change of the weight (a value calculated by subtracting the weight of the fibres from the total weight, i.e. the residual quantity of adsorbed substances) of the fibres was measured with time. The results of the measurements are shown as curve A in Fig. 1.

Fig. 1 also comprises curves B, C, D and E obtained by using a ratio of DEP to repellent of 80:20, 70:30, 60:40 and 50:50, respectively.

It becomes clear from Fig. 1 that using a smaller amount of DEP causes a considerable reduction of the weight of the repelling material, and the life of the repellent becomes shorter.

### EXPERIMENT 2

O.5 g of active carbon fibres was dipped into a mixture of 80 parts by weight of triethyl citrate (TEC) as sustained release agent and 20 parts by weight of the repellent and impregnated until saturated. After the active carbon fibres had been taken out from the mixture they were suspended in the form of threads for 1 hour at room temperature, and thereafter, the weight of adsorbed material (initial weight) was determined with a balance. The active carbon fibres impregnated with the mixture were then kept in a thermostat at 60 °C, and the change of the weight of the fibres was measured. The results of the measurements are shown as curve F in Fig. 2.

Fig. 2 also comprises curves G and H obtained using dipropylene glycol (DPG) and ethanol, respectively, as a sustained release agents. The ratio of sustained release agent to repellent is 80:20 in all cases. In addition, Fig. 2 comprises curve B of Fig. 1 (ratio of DEP to repellent 80:20).

It becomes clear from Fig. 2 that DEP, TEC and DPG have a sustained release effect in this sequence, and that ethanol can hardly be expected to have a sustained release effect because most of the adsorbed material was released in one day (cf. curve H).

### EXPERIMENT 3

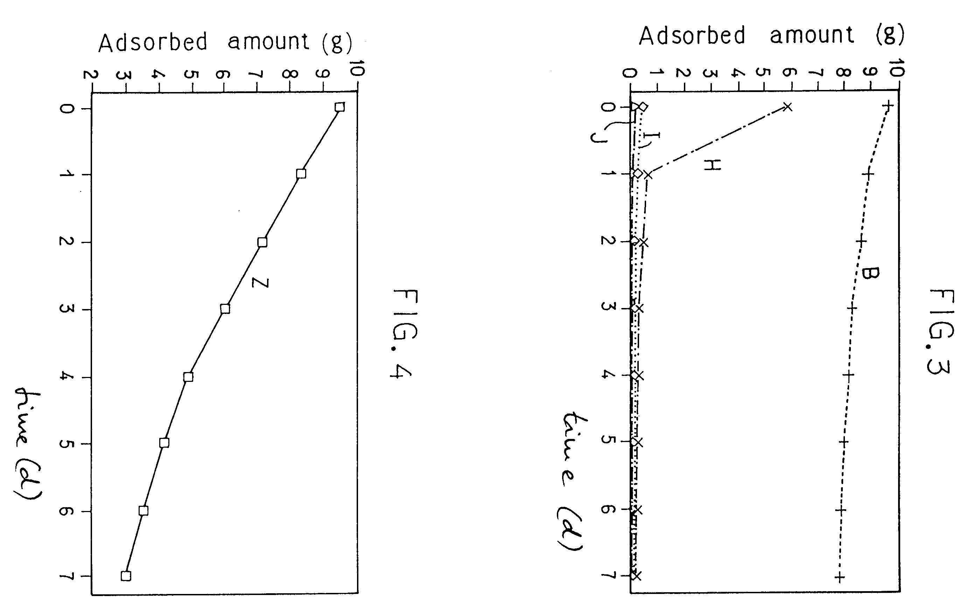

Using a sheet of commercially available granulated active carbon from coconut husk having a specific surface area of 480 m²/g as a carrier, 0.5 g of active carbon was dipped into a mixture of 80 parts by weight of DEP as sustained release agent and 20 parts by weight of the repellent and impregnated until saturated. After suspending the active carbon sheet taken out from the mixture for 1 hour at room temperature, the weight of the adsorbed material (initial weight) was determined with a balance. The active carbon fibres impregnated with the mixture were then kept in a thermostat at 60 °C, ant the change of the weight was measured. The results of the measurements are shown as curve I in Fig. 3.

Fig. 3 also comprises curve J obtained using ethanol as sustained release agent. The weight ratio of sustained release agent to repellent was 80:20. Fig. 3 further comprises curve B of Fig. 1 (cf. Experiment 1), and curve H of Fig. 2.

Although the specific surface area of granulated active carbon is 48 % of the specific surface area of active carbon fibres, the retained quantity of the mixture of DEP and repellent is only 3.4 % as compared with that of the active carbon fibres. Further, the active carbon fibres retained 89 % of the initial weight after 7 days. In contrast, the granulated active carbon can retain the adsorbed material only in a low proportion of 28 % of the initial weight.

The experiment clearly shows that using DEP as sustained release agent together with granulated active carbon hardly leads to a sustained release effect, but using DEP as sustained release agent together with active carbon fibres leads to a considerable sustained release effect due to a synergistic interaction of the active carbon fibres with DEP. This may be due to the different pore distribution and adsorption properties of active carbon fibres as compared with those of granulated active carbon.

### EXPERIMENT 4

To determine the effect of the sustained release agent, an experiment was conducted without using any sustained release agent.

0.5 g of active carbon fibres was dipped into a solution consisting of only the repellent and impregnated with the solution until saturated. After the active carbon fibres had been taken out from the solution and were suspended in the form of threads for 1 hour at room temperature, the weight of the adsorbed material (initial weight) was determined with a balance. The active carbon fibres impregnated with the solution were then kept in a thermostat at 60 °C, and the change of the weight of the fibres was measured. The results of the measurements are shown as curve Z in Fig. 4.

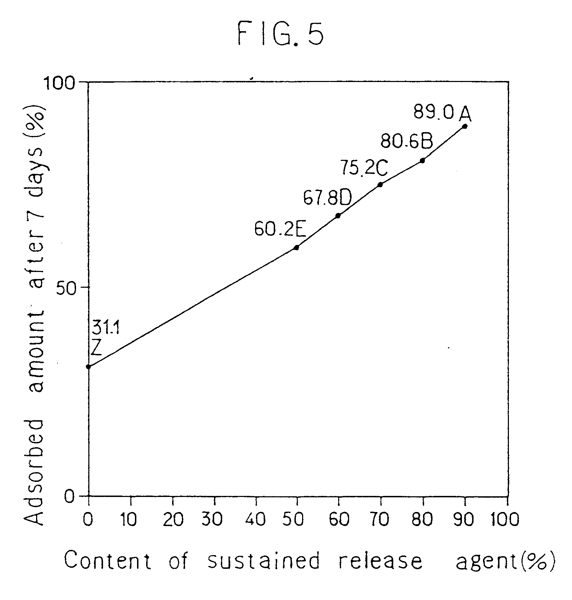

Fig. 5 illustrates the dependence of the proportion of the residual quantity of adsorbed repellent material corresponding to curves A, B, C, D and E of Fig. 1 and curve Z of Fig. 4 after seven days, based on the initial weight of the adsorbed respective quantities. Fig. 5 shows that a content of sustained release agent of 50 % or more (at least 1 part by weight of the sustained release agent per 1 part by weight of the repellent) is necessary as compared with an evaluation standard without using a sustained release agent (residual amount twice as much as compared with the standard).

### EXPERIMENT 5

1 g of carrier was used consisting of (1) active carbon fibres from pitch supported by nonwoven fabric made of polyester on both sides (product of OSAKA GAS CHEMICAL CO., LTD., Commodity code: FN200PS10) having a weight per unit area of 200 g/m² and a specific surface area of 1,000 m²/g, (2) a mixed nonwoven fabric made of nylon and polyester, and (3) filter paper, respectively. After these carriers were dipped into a mixture of 20 parts by weight of the repellent for pigeons produced by mixing the four species phenyl ethylalcohol, geraniol, citronellol and rosegeranium oil, and 80 parts by weight of diethyl phthalate as sustained release agent, the carriers were suspended for 1 hour at room temperature (15 °C), and thereafter, the adsorbed material was weighed. The adsorbed amounts were 12.57 g in the case of the active carbon fibres carrier, 4.24 g in the case of the nonwoven fabric carrier made of nylon/polyester and 0.88 g in the case of the filter paper carrier.

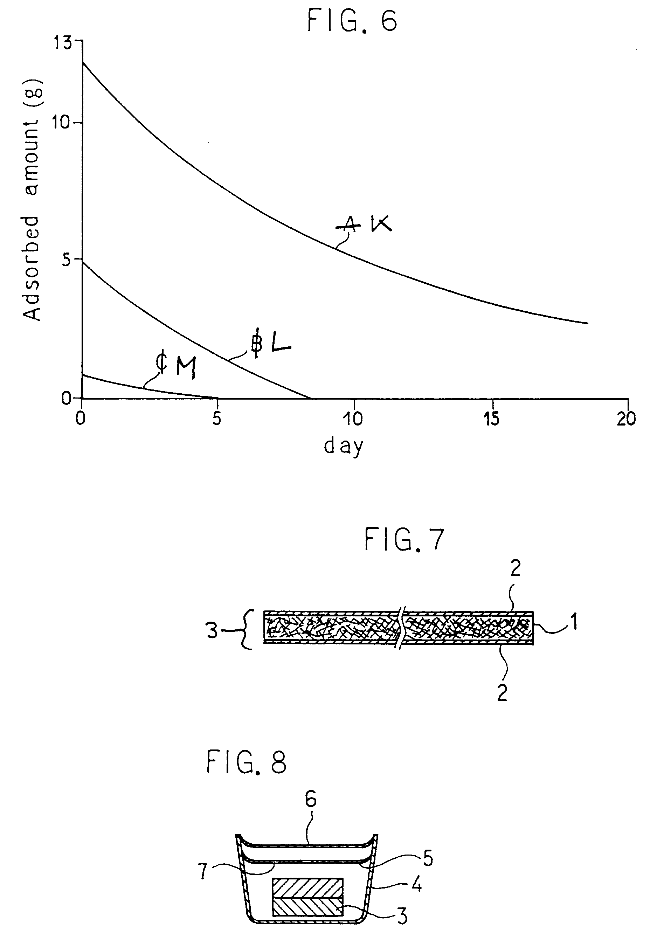

The samples were allowed to stand on a beaker in a thermostat at 60 °C, and thereafter, the changes of the weight of the adsorbed materials with time were measured. The results are shown in Fig. 6.

While the carrier from filter paper (curve M) and the carrier from the mixed nonwoven fabric made of nylon and polyester (curve L) had lost the repellent completely by volatilization after 5 and 8 days, respectively, the carrier from the nonwoven fabric of active carbon fibres (curve K) still retained adsorbed repellent in an amount of about 3 g after 18 days.

It becomes clear that the active carbon fibres are a better carrier for the repelling material than a mixed nonwoven fabric made of nylon and polyester and better than filter paper, both regarding the adsorbed amount and the sustained release property.

### EXAMPLE 1

A solution for producing a repellent for birds was prepared by adding 80 parts by weight of diethylphthalate to 20 parts by weight of a repellent solution for birds containing about 58 % of β-phenylethylalcohol, about 17 % of citronellol, about 13 % of benzylbenzoate, about 6 % of geraniol, about 4 % of linalylacetate and about 2 % of linalool.

As is shown in Fig. 7, two pieces of nonwoven fabric of active carbon fibres 2 (product of OSAKA GAS CHEMICAL CO., LTD., Commodity Code: FN300PS) having a weight per unit area of about 300 g/m² (5 to 8 mm in thickness) were applied by needle-punching on both sides of an active carbon fibre sheet 1 having a specific surface area of 1,000 g/m², and then a small piece of about 4.3 mm x about 4.3 mm (weight = 1 g) of the composite carrier was cut out, and 10 g of the repellent solution for birds was added dropwise to the piece to adsorb the repellent.

Thereafter, the obtained sample 3 (Fig. 8) was put in a container 4 made of metal and having an inner diameter of 50 mm and a height of 27 mm. In the inner lid 5 were formed twelve openings 7 having a diameter of 7 mm. The container was then canned using a cover 6 and sealed with a can-forming device to produce a transportable can storing repellent material for birds.

After the sealed can storing the repellent for birds was allowed to stand for 1 month, the cover 6 was opened, and the can was suspended in a tree in a park where birds (pigeons, sparrows, bulbuls, etc.) came flying for 2 months to observe the effect of the repelling material. Birds (pigeons, sparrows, bulbuls, etc.) did not approach the tree with the suspended can within a 10-meter radius from the tree, however birds came again flying around the tree after 3 weeks. This demonstrates that the present repellent is effective to repel birds, in particular, pigeons, sparrows, bulbuls, etc.

### EXAMPLE 2

A repellent solution was prepared by adding 80 parts by weight of diethyl phthalate to 20 g of phenylethylalcohol. The solution was adsorbed on 1 g of active carbon fibres in the same manner as in Example 1. The fibres were put in a can as shown in Fig. 8; the can was sealed and opened after 1 month, and suspended in a tree in a park where birds (pigeons, sparrows, bulbuls, etc.) came flying. The birds did not approach the tree. However, the birds did approach the tree again after 3 weeks.

This demonstrates that the present repellent is effective to repel birds.

### EXAMPLE 3

A repellent for dogs and cats was prepared by mixing about 34 parts by weight of cinnamic aldehyde, about 6 parts by weight of γ-nonylolactone, about 57 parts by weight of limonen (major component of lemon oil) and 3 parts by weight of paracresol acetate, and a mixed solution of 20 parts by weight of this mixture and 80 parts by weight of diethylphthalate was prepared. Into this mixture, active carbon fibres as used in Experiment 5 were dipped, and the repellent was adsorbed and retained on the active carbon fibres.

This repellent was put near garbage where cats often searched about for food, to observe the effect of the repelling material.

Before placing the repellent, cats had gathered round the garbage and had scattered the rubbish. However, after the repellent had been placed, cats did not approach the garbage so that the place was kept clean. The repellent effect continued for 3 weeks after placing the repellent.

Further, 1 g of active carbon fibres as used in Example 5 was dipped in a solution produced by dissolving 20 parts by weight of limonen in 80 parts by weight of diethylphthalate to obtain a repellent for animals used for dogs and cats.

This repellent was placed near garbage where cats often searched about for food, to observe the effect of the repelling material. The repellent effect continued for 2 weeks. This demonstrates that the effectivity of the present repellent comprising only limonen as active ingredient.

To summarize, with the present repellents using active carbon fibres, a great amount of repellent material can be adsorbed and retained, and the repellent material is gradually released to a high degree for a long time, and therefore, the present repellents are excellent for repelling animals.

## Claims

1. Animal repellent, comprising:
- active carbon fibres as carrier,
- an animal repelling agent,
and
- at least one substance selected from diethyl phthalate, dibutyl phthalate, trimethyl citrate, triethyl citrate, dipropylene glycol and butyl diglycol as sustained release agent.

2. Animal repellent according to claim 1, characterized in that the active carbon fibres have a diameter of 2 to 30 µm and a specific surface area of 500 to 2500 m²/g.

3. Animal repellent according to claim 1 or 2, characterized in that the sustained release agent is present in an amount of 1 to 9 parts by weight per 1 part by weight of the animal repelling agent.

4. Animal repellent according to one of claims 1 to 3, characterized in that the animal repelling agent is a repelling agent for dogs and cats, selected from cinnamic aldehyde, γ-nonylolactone, lemon oil and p-cresol acetate.

5. Animal repellent according to one of claims 1 to 3, characterized in that the animal repelling agent is a repelling agent for birds, selected from phenylethyl alcohol, geraniol, rosegeranium oil, spearmint oil, L-carvone, bornylacetate, camphor, tetrahydrothiophene and citronellol.

6. Animal repellent according to one of claims 1 to 3, characterized in that the animal repelling agent is a repelling agent for cockroaches, selected from cinnamic alcohol, methyl eugenol and geraniol.

7. Animal repellent according to one of claims 1 to 3, characterized in that the animal repelling agent is a repelling agent for mosquitoes, selected from sandalwood oil, menthol and citral.

## Patentansprüche

1. Tierrepellent, das enthält:
- Aktivkohlefasern als Träger,
- einen Tierrepellent-Wirkstoff
sowie
- mindestens eine unter Diethylphthalat, Dibutylphthalat, Trimethylcitrat, Triethylcitrat, Dipropylenglykol und Butyldiglykol ausgewählte Substanz als Mittel zur verzögerten Wirkstofffreisetzung.

2. Tierrepellent nach Anspruch 1, dadurch gekennzeichnet, daß die Aktivkohlefasern einen Durchmesser von 2 bis 30 µm und eine spezifische Oberfläche von 500 bis 2500 m²/g aufweisen.

3. Tierrepellent nach Anspruch 1 oder 2, dadurch gekennzeichnet, daß das Mittel zur verzögerten Wirkstofffreisetzung in einer Menge von 1 bis 9 Gew.-Teilen pro Gew.-Teil Tierrepellent-Wirkstoff vorliegt.

4. Tierrepellent nach einem der Ansprüche 1 bis 3, dadurch gekennzeichnet, daß der Tierrepellent-Wirkstoff ein Repellent-Wirkstoff gegen Hunde und Katzen ist, der unter Zimtaldehyd, γ-Nonyllacton, Citronenöl und p-Kresolacetat ausgewählt ist.

5. Tierrepellent nach einem der Ansprüche 1 bis 3, dadurch gekennzeichnet, daß der Tierrepellent-Wirkstoff ein Repellent-Wirkstoff gegen Vögel ist, der unter Phenylethylalkohol, Geraniol, Palmarosaöl, Pfefferminzöl, L-Carvon, Bornylacetat, Campher, Tetrahydrothiophen und Citronellol ausgewählt ist.

6. Tierrepellent nach einem der Ansprüche 1 bis 3, dadurch gekennzeichnet, daß der Tierrepellent-Wirkstoff ein Repellent-Wirkstoff gegen Küchenschaben ist, der unter Zimtalkohol, Methyleugenol und Geraniol ausgewählt ist.

7. Tierrepellent nach einem der Ansprüche 1 bis 3, dadurch gekennzeichnet, daß der Tierrepellent-Wirkstoff ein Repellent-Wirkstoff gegen Moskitos ist, der unter Sandelholzöl, Menthol und Citral ausgewählt ist.

## Revendications

1. Répulsif pour animaux, comprenant :
- des fibres de carbone actif comme support,
- un agent à effet répulsif pour animaux
et
- au moins une substance sélectionnée parmi le phtalate de diéthyle, le phtalate de dibutyle, le citrate de triméthyle, le citrate de triéthyle, le dipropylèneglycol et le butyldiglycol en tant qu'agent de libération continue.

2. Répulsif pour animaux selon la revendication 1, caractérisé en ce que les fibres de carbone actif ont un diamètre de 2 à 30 µm et une surface spécifique de 500 à 2 500 m²/g.

3. Répulsif pour animaux selon la revendication 1 ou 2, caractérisé en ce que l'agent de libération continue est présent en une quantité de 1 à 9 parties en poids pour 1 partie en poids d'agent à effet répulsif pour animaux.

4. Répulsif pour animaux selon l'une des revendications 1 à 3, caractérisé en ce que l'agent à effet répulsif pour animaux est un agent à effet répulsif pour chiens et chats, sélectionné parmi l'aldéhyde cinnamique, la γ-nonyllactone, l'essence de citron et l'acétate de p-crésol.

5. Répulsif pour animaux selon l'une des revendications 1 à 3, caractérisé en ce que l'agent à effet répulsif pour animaux est un agent à effet répulsif pour oiseaux, sélectionné parmi l'alcool phényléthylique, le géraniol, l'essence de géranium rosat, l'essence de menthe verte, la L-carvone, l'acétate de bornyle, le camphre, le tétrahydrothiophène et le citronellol.

6. Répulsif pour animaux selon l'une des revendications 1 à 3, caractérisé en ce que l'agent à effet répulsif pour animaux est un agent à effet répulsif pour cancrelats, sélectionné parmi l'alcool cinnamique, le méthyleugénol et le géraniol.

7. Répulsif pour animaux selon l'une des revendications 1 à 3, caractérisé en ce que l'agent à effet répulsif pour animaux est un agent à effet répulsif pour moustiques, sélectionné parmi l'essence de santal citrin, le menthol et le citral.
